# EUROPEAN PATENT APPLICATION

(11) **EP 2 680 142 A2**
(43) Date of publication of application: **01.01.2014**
(21) Application number: 13170800.0
(22) Date of filing: 06.06.2013
(51) Int. Cl.: G06F 9/48

(54) **Method and apparatus for a task based operating framework**

(30) Priority: 29.06.2012 US 201213538725
(71) Applicant: Nokia Corporation, 02150 Espoo (FI)
(72) Inventor: Kier, Tom, Sunnyvale, CA California 94086 (US)
(74) Representative: Nokia Corporation

(57) **Abstract**

Various methods are provided for enabling a task based operating system. One example method may include receiving an input identifying at least one task to be performed. A method may further include determining that the at least one task corresponds to at least one exposed task, the at least one exposed task is generated based on one or more tasks exposed by one or more available software packages. A method may further include causing a view to be displayed in an instance in which the at least one exposed task is associated with a view provided by a software package of the one or more available software packages. In some examples, the view is a graphical interface generated by the software package and is configured to perform the exposed task.

## Description

### TECHNOLOGICAL FIELD

Embodiments of the present invention relate generally to operating system methodology and, more particularly, relate to a method, apparatus, and computer program product for a task based operating environment.

### BACKGROUND

Example operating system environments are generally application centric. In an example application centric operating system environment, a user is able to launch an application by selecting an icon or some other representation of the application. In application centric operating system environments, a user is required to select a particular application that would enable a particular task to be performed. Once inside the application, the user may then take a variety of different actions to achieve a plurality of functions. For example, an email application may be opened by selecting an icon that looks like a letter. Once opened, a user may read a message, send a message and/or the like. By way of further example, a user of an email application may have three different windows open, a first window that contains a draft email message to a first person, a second window containing a received message from a second person and a third email containing an inbox. Further still, a user may also have a social media application open with a number of windows, allowing the user to switch between currently active applications. The user however always enters the application through a front end that generally starts with a splash screen followed by a home screen.

In some examples, an application centric operating system may have a process manager which may be further configured to display a list of applications and a list of windows that are tied to those one or more applications. In these cases and in an instance in which the system or user shuts down the application, then all windows related to that application may be removed and/or may disappear from view. Once removed from view, in order to access a particular feature or perform a task within the application, the user must again navigate through a splash screen and through the application to a screen that may provide the particular feature.

Additional input mechanisms may be used in conjunction with an application centric operating system, for example an input system that is configured to receive a command "call" followed by an identifier, which is configured to activate a phone LEGAL02/32836226vl application and initiate a call to the provided identifier. Other short cuts such as call home or call voicemail may be used. However any shortcut, such as those identified above, are configured to open an identified application and/or are directly tied to a particular application.

### BRIEF SUMMARY

Methods, apparatuses, and computer program products are provided herein for enabling a task based operating environment. In some example embodiments, a software package may expose one or more tasks that it is configured to perform. A task launcher may then aggregate all of the tasks provided by the available software packages and may cause those tasks to be provided to a user via a graphical user interface (GUI). In an instance in which a task to be performed is identified, the methods, apparatuses, and computer program products described herein may determine whether the received task is configured to launch a view, cause an action to be taken or defines a topic. In an instance in which the task is configured to launch a view, a view is provided by a software package for the purpose of performing the task. In an instance in which the task is configured to cause an action to be taken, that action would be take place, and may not result in a view being launched. Finally if the task defines a topic, one or of the available software packages may provide subtasks for user selection based on the defined topic.

In some example embodiments, a method is provided that comprises receiving an input identifying at least one task to be performed. The method of this embodiment may also include determining that the at least one task corresponds to at least one exposed task, the at least one exposed task is generated based on one or more tasks exposed by one or more available software packages. The method of this embodiment may also include causing a view to be displayed in an instance in which the at least one exposed task is associated with a view provided by a software package of the one or more available software packages. In some example embodiments, the view is a graphical user interface generated by the software package and is configured to perform the at least one exposed task.

In further example embodiments, an apparatus is provided that includes at least one processor and at least one memory including computer program code with the at least one memory and the computer program code being configured, with the at least one processor, to cause the apparatus to at least receive an input identifying at least one task to be performed. The at least one memory and computer program code may also be configured to, with the at least one processor, cause the apparatus to determine that the at least one task corresponds to at least one exposed task, the at least one exposed task is generated based on one or more tasks exposed by one or more available software packages. The at least one memory and computer program code may also be configured to, with the at least one processor, cause the apparatus to cause a view to be displayed in an instance in which the at least one exposed task is associated with a view provided by a software package of the one or more available software packages. In some example embodiments, the view is a graphical user interface generated by the software package and is configured to perform the at least one exposed task.

In yet further example embodiments, a computer program product may be provided that includes at least one non-transitory computer-readable storage medium having computer-readable program instructions stored therein with the computer-readable program instructions including program instructions configured to receive an input identifying at least one task to be performed. The computer-readable program instructions may also include program instructions configured to determine that the at least one task corresponds to at least one exposed task, the at least one exposed task is generated based on one or more tasks exposed by one or more available software packages. The computer-readable program instructions may also include program instructions configured to cause a view to be displayed in an instance in which the at least one exposed task is associated with a view provided by a software package of the one or more available software packages. In some example embodiments, the view is a graphical user interface generated by the software package and is configured to perform the at least one exposed task.

In yet further example embodiments, an apparatus is provided that includes means for receiving an input identifying at least one task to be performed. The apparatus of this embodiment may also include means for determining that the at least one task corresponds to at least one exposed task, the at least one exposed task is generated based on one or more tasks exposed by one or more available software packages. The apparatus of this embodiment may also include means for causing a view to be displayed in an instance in which the at least one exposed task is associated with a view provided by a software package of the one or more available software packages. In some example embodiments, the view is a graphical user interface generated by the software package and is configured to perform the at least one exposed task.

### BRIEF DESCRIPTION OF THE DRAWINGS

Having thus described embodiments of the invention in general terms, reference will now be made to the accompanying drawings, which are not necessarily drawn to scale, and wherein:

Figure 1 is a schematic representation of a system that may benefit from some example embodiments of the present invention;

Figure 2a illustrates an example task listing in accordance with some example embodiments of the present invention;

Figure 2b illustrates an example view life cycle according to some example embodiments of the present invention;

Figure 2c illustrates an example task chain in accordance with some example embodiments of the present invention;

Figure 3 illustrates a block diagram of an apparatus that embodies a task based system according to some example embodiments of the present invention;

Figure 4 is a schematic block diagram of a mobile terminal according to some example embodiments of the present invention;

Figure 5 illustrates a flowchart according to an example method in a task based operating system according to an example embodiment of the invention; and

Figure 6 illustrates a flowchart according to an example method in a task based operating system according to an example embodiment of the invention.

### DETAILED DESCRIPTION

Example embodiments will now be described more fully hereinafter with reference to the accompanying drawings, in which some, but not all embodiments are shown. Indeed, the embodiments may take many different forms and should not be construed as limited to the embodiments set forth herein; rather, these embodiments are provided so that this disclosure will satisfy applicable legal requirements. Like reference numerals refer to like elements throughout. The terms "data," "content," "information," and similar terms may be used interchangeably, according to some example embodiments, to refer to data capable of being transmitted, received, operated on, and/or stored. Moreover, the term "exemplary", as may be used herein, is not provided to convey any qualitative assessment, but instead merely to convey an illustration of an example. Thus, use of any such terms should not be taken to limit the spirit and scope of embodiments of the present invention.

As used herein, the term "circuitry" refers to all of the following: (a) hardware-only circuit implementations (such as implementations in only analog and/or digital circuitry); (b) to combinations of circuits and software (and/or firmware), such as (as applicable): (i) to a combination ofprocessor(s) or (ii) to portions of processor(s)/software (including digital signal processor(s)), software, and memory(ies) that work together to cause an apparatus, such as a mobile phone or server, to perform various functions); and (c) to circuits, such as a microprocessor(s) or a portion of a microprocessor(s), that require software or firmware for operation, even if the software or firmware is not physically present.

This definition of "circuitry" applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or application specific integrated circuit for a mobile phone or a similar integrated circuit in a server, a cellular network device, or other network device.

In some examples of a task based system, application icons may not be presented to the user, may be hidden or otherwise obscured in the user interface thus preventing a user from accessing an application directly. Alternatively or additionally, in some example embodiments described herein, an application may not be accessible at all via an icon or may not be directly launched by the user. Instead and in some example embodiments, a task based system is disclosed that enables a user to provide a task to be accomplished to the user interface and in response the systems and methods described herein may cause a software package to provide a view, take an action or the like, thereby enabling the user to operate in terms of tasks to be accomplished, generally the tasks to be accomplished are application agnostic.

In some example embodiments, the user interaction with a user interface may be related to a task or a topic to be performed, an end state to be achieved, an intent to be performed and/or like. In some examples, the task or topic received form the user is not application dependent, but is application independent. For example, an application independent task such as "play" may relate to subtasks such as "play music," "play video," "play a game," and/or the like. As such, the user may be prompted with those subtasks. Even in an instance in which the task provided by the user via the user interface is "play music," one or more software packages may be available that can provide music playing functionality. As such, a user may no longer be required to select a particular application and then navigate to a particular functionality of that application to perform a task, but instead may select a task without being concerned about choosing a particular software package that accomplishes the selected task.

In some example embodiments, the one or more software packages may be configured to expose one or more tasks that the software package is configured to perform. These exposed one or more tasks may then be selected by an example task management system based on the task input via the user interface. Upon receipt of a selection of the one or more tasks, the one or more software packages may be configured to launch, build, generate or other provide a view on the user interface. As is described herein, a view may include, but is not limited to a display on a user interface, a voice/audio prompt, a multimodal output and/or the like. Alternatively or additionally, the task may be configured to perform an action based on the task defined by the software package. In some cases the action may not be related to a view.

In some example embodiments, a task may be defined as a method to invoke functionality in the one or more software packages. As such, the exposed tasks by the one or more software packages function as an entry point into the one or more software packages. In other words, a software package may launch or build a view for the purpose of accomplishing the task. For example, and in response to a "play music" command, a music playing software package may be launch, build or otherwise provide a view that lists available music to be played and/or the software package may be configured to perform an action such as playing a randomly selected song without the need to open the software package and navigate to the desired functionality.

By way of an additional example, a user may propose a task: "compose a status update." In response the system as described herein may determine that this task is related to social media applications and, as such, may be configured to build, launch or otherwise provide a view in a first social media software package that enables the user to perform a status update. Again, the status update view is built or launched via the task management system, without causing the user to navigate through the social media splash screen and through the other functionality of the software package in order to locate the status update functionality. Further, after completing the status update, a new view from a second social media software package may be launched. Further and in some examples, the status update field in the second social media software package may be populated with the previously entered status update in the first social media software package. The second view may be launched in the second social media application because tasks may span multiple applications. In this case the task of performing a status update was performed across multiple applications in order to accomplish the task

As the views are generated, a task chain is generated by the task management system allowing, for example, the user to switch between the view of the first social media software package that is configured to provide status updates and the view of the second social media software package that is configured to provide status updates without causing the user to open and close the individual software packages. Advantageously, the task chain is provided in the user interface and enables the user to navigate all of the tasks in the chain without concern for the software package that generated the task.

Alternatively or additionally, a task may result in a topic. A topic is defined as an overarching concept that may have one or more subtasks, in other words a topic may be part of a hierarchy of defined tasks. For example, a task of "play" may result in a topic of "play" because there are a number of available subtasks in a task hierarchy, such as but not limited to "play music," play video," and/or "play a game." In some examples, a task becomes a topic in an instance in which the task does not correspond to an action or a view provided by the one or more software packages 16.

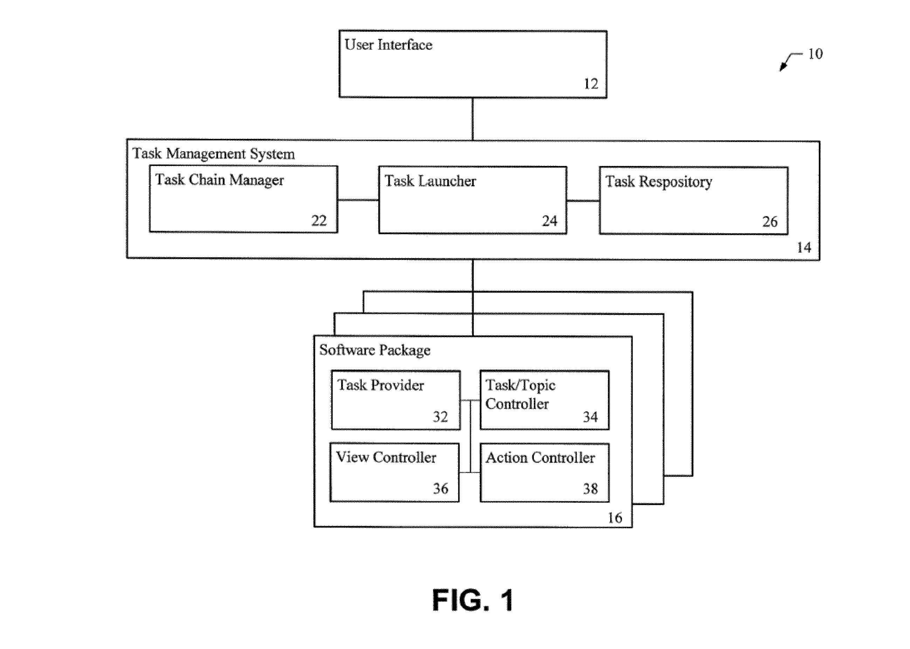

Figure 1 is a schematic representation of a task based system 10 that may benefit from some example embodiments of the present invention. The example task based system 10, in some example embodiments, comprises a user interface 12, a task management system 14, and one or more software packages 16. The example task based system 10 is configured, in some example embodiments, to enable a user to interact in a task based environment with one or more software packages 16 via a user interface 12. The user interface 12 is configured to receive one or more task requests from a user, an application, a sensor, or the like. The task requests may take the form of a selection, a text input, a voice command and/or other multimodal inputs. The user interface 12 is then configured to pass the one or more task requests to the task management system 14.

The task management system 14 may then query or otherwise determine from the one or more software packages 16 via one or more task providers 32 whether a task has been exposed by the one or more software packages that matches and/or is similar to the received task. A task matches or is similar to another task in an instance which the task received via the user interface 12 has a similar intent, end state, purpose or the like to the one or more exposed tasks. Once a task is determined to match an exposed task, the exposed task may then result in a view from the one or more software packages 16 to be presented via the user interface 12 (e.g. a screen that meets the intent of the task), in an action being performed via the one or more software packages (e.g. phone call is initiated), and/or in one or more subtasks being received in an instance in which the exposed task defines a topic.

For example, at the top level and in an instance in which a topic is not defined, a software package 16 may present, such as via the user interface 12, a task to "Play Music". If the user selects that task, via the user interface 12, the task management system 14 via the task provider 32 may not launch a view in a software package related to "play music," but, instead may cause the task provider 32 to display the subtasks of "Play Music" such as "Playlists", "Genres", "Albums", and "Artists". "Play Music" may be defined as a topic because there are a number of subtasks available, as such "play music," is set as a topic by the task management system 14.

In an instance in which the parent task "Play Music" is invoked, such as by the task management system 14, the current topic may be set to "play music". Once the topic is set by the task management system 14, each software package 16 has the opportunity to respond to the topic, via the task provider 32, with a set of subtasks for that topic. In this example, one or more software packages relating to playing music may respond with tasks for "Playlists", "Genres", "Albums", and "Artists". Other software packages may also add additional subtasks via the task provider 32.

In addition to setting a topic, tasks can also result in an action being performed or a view being displayed. In an instance in which, the task management system 14 receives a task associated with an intent, purpose and/or end state, such as when a user selects a task via the user interface 12, the task launcher 24 may take an action causing a software package to perform an action or display a view. The task launcher 24 causes a software package to take an action or display a view in an instance in which an intent of an input task matches or is similar to an intent of a task exposed by a software package 16. For example in a software package that exposes tasks for "Playlists," "Genres," "Albums," and "Artists" each task relates to an intent that causes a view in the software package to be displayed. For example a software package 16 could also expose a task based intent that starts playing a song without showing a view. In other cases a view is shown in conjunction with performance of an action. In some examples, an action may not result in a view being generated.

In some example embodiments, the task management system 14 comprises a task chain manager 22, a task launcher 24 and a task repository 26. The task launcher 24 is configured to manage each of the tasks received from the one or more task providers 32. The task launcher 24 is configured to receive the one or more tasks input from the user interface 12 and is further configured to select a task of the one or more tasks provided by the task provider 32 based on the received one or more tasks. The task chain manager 22 is configured to generate a task chain as each task is added or removed by the task launcher 24. The task chain manager 22 enables a user, via the user interface 12, to navigate forwards and backwards and/or to view any task currently in the task chain. The task repository 26 is configured to store historical task data, contextual information, user preferences and/or the like. The task launcher 24, the user interface 12 or the like may be configured to access the task repository 26 to determine one or more tasks to display to a user, determine a task selection, or the like based on the data stored in the task repository.

In some example embodiments, the one or more software packages 16 may be configured to expose one or more tasks via a task provider 32. The tasks that are exposed by the one or more software packages are configured to define the functionality provided by the software package 16. Alternatively or additionally, a software package 16 may have a view or action tied to each of the exposed tasks.

In some example embodiments, the one or more software packages may be configured to expose one or more tasks via its task provider 32 as well as any intent that would result in a view or action to the task management system 14. A software package definition, a separate manifest file or the like may specific the components of a software package. An example of the software package definition for a software package that is configured to play music includes, but is not limited to:

```
 var MUSIC = newApp({
 id: 'music',
 path: 'apps/music',
 taskProvider: 'javascripts/taskprovider.js',
 sources: [
                     { view: 'album' },
                     { view: 'artist' },
                     { view: 'genres' },
                     { view: 'playlist' },
                     { ess: 'music.css' }
               ],
               intents:[
                     { intent: 'MUSIC_ALBUMS', view: 'album' },
                     { intent: 'MUSIC_ARTISTS', view: 'artist' },
                     { intent: 'MUSIC_GENRES', view: 'genres' },
                     { intent: 'MUSIC_PLAYLISTS', view: 'playlist' }
                    ]
               });
```

Each task object provided by the one or more software packages 16 may include a title field, a rank field and/or a description filed. The title field may include the text to displayed on the user interface 12 by the task launcher 24. The rank field may be used by the task launcher 24 to control the sort order of the tasks displayed for each topic. Tasks with higher ranks may correspond to tasks that are used more frequently by the user. Rank can also be assigned by some other criteria, such as the use frequency of the task by a certain group of users, sensor input, contextual information, historical data or current time or day each of which may be stored in the task repository 26. Alternatively or additionally, other forms of context information from a network server or another device may also be used for assigning rank.

The task provider 32 is configured to manage the exposed tasks and, as such, at least one task provider 32 is provided for each software package 16. The task provider 32 may be embodied by the software package 16, may act as an interface to the software package 16 (e.g. an application programming interface) or may be a separate entity operating in the task based system 10. As such the task provider 32 is configured to provide the one or more tasks exposed by the software package 16 to the task management system 14.

In some example embodiments, the task provider 32 is configured to implement one or more functions received from the task launcher 24. One such function may include, but is not limited to, a get tasks function, such as getTasks(topic, addTasks). The get tasks function may be called by the task launcher 24 in an instance in which a topic is determined and/or a topic is changed. The topic may be passed to the task provider 32 via the get task function. The get task function also defines a call back to enable a software package 16 to asynchronously add tasks for the topic (for example when processing the results of a database query, remote query or the like). The getTasks function is configured to return to the task launcher 24 an array of tasks for the specified topic from each task provider associated with each software package 16.

In some example embodiments each task provider 32, of the one or more task providers is configured to include a view controller 36, an action controller 38 and a task and/or topic controller 34. The view controller 36 is configured to manage the one or more views provided by a software package of the one or more software packages 16. An action controller 38 is configured to manage the one or more actions available by a software package of the one or more software packages 16. The task/topic controller 34 is configured to manage the one or more tasks that are exposed by a software package of the one or more software packages 16. The task and/or topic controller 34 is further configured to receive a topic from the task management system 14, and then may query, access or otherwise determine, whether a software package of the one or more software packages 16 is configured to perform one or more tasks under the topic. In an instance in which the task and/or topic controller 34 determines that the software package 16 is configured to perform one or more tasks under the topic, the task and/or topic controller 34 is configured to cause the one or more tasks exposed by the one or more software packages 16 to be provided to the task management system 14.

In some example embodiments, the one or more software packages 16 provide one or more views that are associated with an intent, purpose and/or end state. As such in an instance in which, the task management system 14, such as via the task launcher 24, receives a task having an intent matching the intent of the view, the task launcher via the view controller 36 may cause the view to be launched via the user interface 12. The software package 16 may be configured to also push views and pop views via the task chain manager 22 thus enabling the one or more software packages 16 to create a view hierarchy that is managed by the task chain manager 22. In some example embodiments, the view hierarchy may be controlled by the software packages 16. As described herein and with respect some example embodiments, a view is created in an instance in which the view is first pushed onto the task chain. Views get destroyed when the view is popped of the task chain. During the lifetime of a view, the view may become visible and hidden multiple times as other views get pushed on and off.

In some example embodiments, a view may be defined by a hypertext markup language file (html) file and a JavaScript class that is configured to act as the controller for that view. Other implementations may also be used and as such a view should not be restricted by file type or class definitions in alternate example embodiments.

In some example embodiments, a view file that is provided by the view controller 36 is configured to define a view in the user interface 12 and a view layout. The view file is configured to act as template for the view. Whenever an instance of the view is created, the view controller 36 is configured to copy the view file and places the new instance of the view file on the current task chain via the task chain manager 22. The view controller 36 further defines a class that implements the control for that view. In an instance in which, the view is created via the view controller 36, a new instance of the view class may be created.

In some example embodiments, the view controller 36 may be configured to implement a construction function such as a MYAPP.ViewController = function(intent, args) function. The construction function may be configured in some example embodiments to be called when the view controller is initialized such as in an instance in which a view is to be created. The function parameters include an intent that was used to launch the view. In some cases the intent may be null in an instance in which an intent was not used to create the view. The remaining parameters may be parameters passed from a preceding view in the same or different software package.

In some example embodiments, the view controller 36 may be configured to implement a task setup function such as a MYAPP.ViewController.prototype.onCreate = function() function. The task setup function may be launched in an instance in which the task is created. In some examples, the task setup function is called once the view controller 36 instantiates the view filed, but before the view is displayed. At such time various elements and the view file itself may be modified.

In some example embodiments, the view controller 36 may be configured to implement a activate view function such as MYAPP.ViewControllerprototype.onActivate = function() function. The activate view function may be called in an instance in which a view is to become an active view as a result of being pushed to the top of the task chain, or becoming the topmost view because another view on top of this view was popped from the task chain. In some examples, event handlers may be implemented via the activate view function.

In some example embodiments, the view controller 36 may be configured to implement a deactivate function such as a MYAPP.ViewController. prototype.onDeactivate = function() function. In some examples, the deactivate function is called in an instance in which a view is being deactivated by either being popped of the task chain, or another view being pushed on top of the current view in the task chain. Event handlers and other cleanup may be formed by the deactivate function.

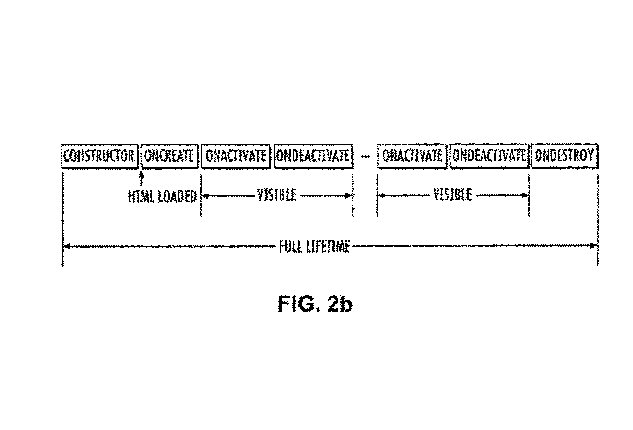

In some example embodiments, the view controller 36 may be configured to implement a destroy function such as a MYAPP.ViewController.prototype.onDestroy = function() function. In some examples, the destroy function is configured to perform any cleanup needed before the view is destroyed as a result of being popped off the task chain. As such, Figure 2b illustrates an example view life cycle according to some example embodiments described herein.

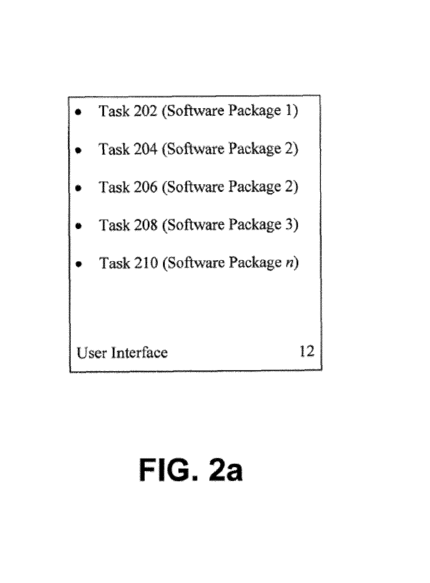

Figure 2a illustrates an example task listing in a user interface 12 in accordance with some example embodiments of the present invention. As was described with respect to Figure 1, a user interface may comprise a series of available tasks, such as tasks 202-210. Each of the tasks 202-210 may be provided by different software packages as is illustrated in Figure 2a. Each of the displayed tasks may be selected by a user. On selection, a task may result in a view generated by a software package, an action taken by a software package and/or a topic may be generated.

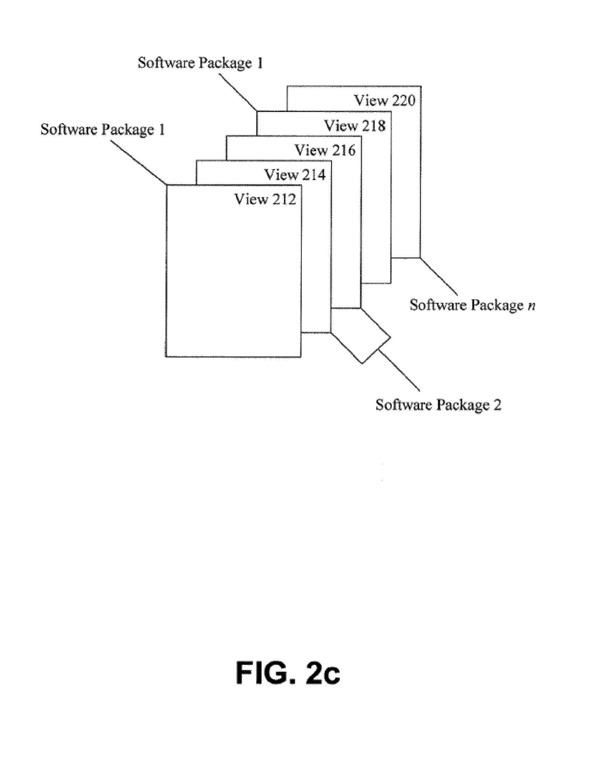

Figure 2c illustrates an example task chain in accordance with some example embodiments of the present invention. As was described with reference to Figure 1, a software package is, for example, configured to provide a collection of views that are managed by a task provider. Each of those views is associated with an intent, purpose or end state, such that when a task is requested, such as via the user interface, the view can be displayed. As a task is being performed, software packages add or remove (e.g. push or pop) the views 212-220 creating a task chain. As such, a view is created when the view is added to the task chain and destroyed when removed from the task chain. The views 212-220 may be added by different software packages based on the task and a user may navigate between the views 212-220 spanning multiple software packages. In some example embodiments, the views 212-220 are updated such that an interaction with a view from a software package may update another view from another software package in the task chain.

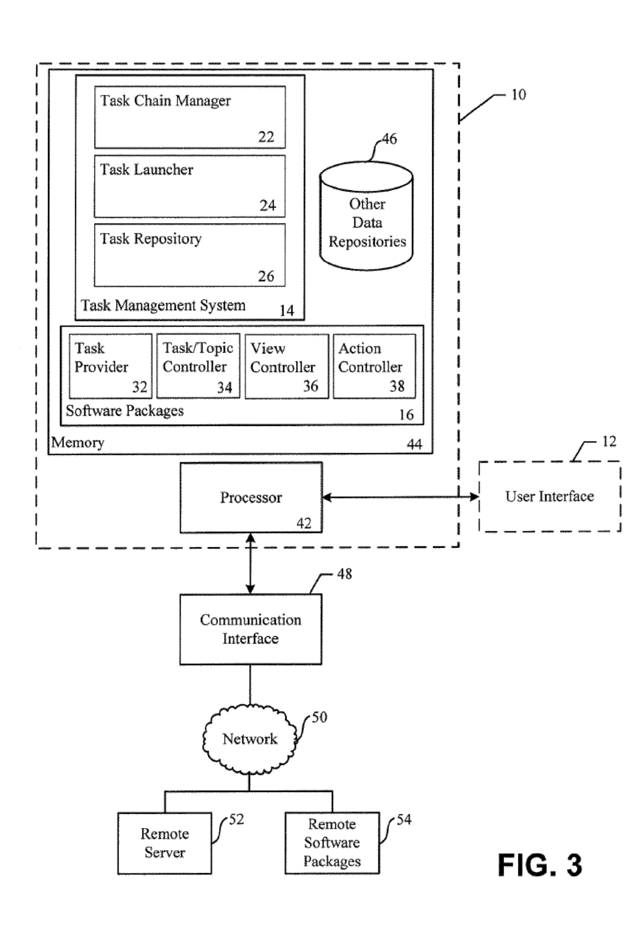

Figure 3 illustrates a block diagram of an apparatus configured to embody the task based system 10 according to some example embodiments of the present invention. It will be appreciated that the task based system 10 is provided as an example of an embodiment of the invention and should not be construed to narrow the scope or spirit of the invention in any way. In this regard, the scope of the disclosure encompasses many potential embodiments in addition to those illustrated and described herein. As such, while Figure 3 illustrates one example of a configuration of an apparatus for facilitating a task based system other configurations may also be used to implement embodiments of the present invention.

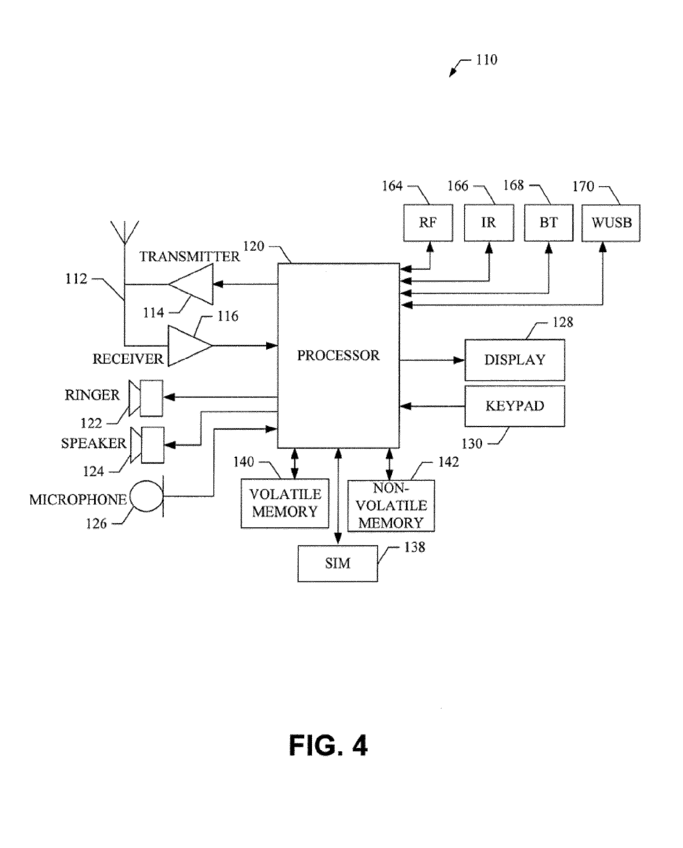

The task based system 10 may be embodied as a desktop computer, laptop computer, mobile terminal, tablet, mobile computer, mobile phone, mobile communication device, tablet, one or more servers, one or more network nodes, game device, digital camera/camcorder, audio/video player, television device, radio receiver, digital video recorder, positioning device, any combination thereof, and/or the like. In an example embodiment, the task based system 10 is embodied as a mobile terminal, such as that illustrated in Figure 4.

In this regard, Figure 4 illustrates a block diagram of a mobile terminal 110 representative of one embodiment of a task based system 10. It should be understood, however, that the mobile terminal 110 illustrated and hereinafter described is merely illustrative of one type of task based system 10 implementation that may benefit from embodiments of the present invention and, therefore, should not be taken to limit the scope of the present invention. While several embodiments of the user terminal (*e.g.,* mobile terminal 110, user equipment or like) are illustrated and will be hereinafter described for purposes of example, other types of user terminals, such as mobile telephones, mobile computers, portable digital assistants (PDAs), pagers, laptop computers, desktop computers, gaming devices, televisions, and other types of electronic systems, may employ embodiments of the present invention.

As shown, the mobile terminal 110 may include an antenna 112 (or multiple antennas 112) in communication with a transmitter 114 and a receiver 116. The mobile terminal 110 may also include a processor 120 configured to provide signals to and receive signals from the transmitter and receiver, respectively. The processor 120 may, for example, be embodied as various means including circuitry, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC (application specific integrated circuit) or FPGA (field programmable gate array), or some combination thereof. Accordingly, although illustrated in Figure 4 as a single processor, in some embodiments the processor 120 comprises a plurality of processors. These signals sent and received by the processor 120 may include signaling information in accordance with an air interface standard of an applicable cellular system, and/or any number of different wireline or wireless networking techniques, comprising but not limited to Wireless-Fidelity (Wi-Fi), wireless local access network (WLAN) techniques such as Institute of Electrical and Electronics Engineers (IEEE) 802.11, 802.16, and/or the like. In addition, these signals may include speech data, user generated data, user requested data, and/or the like. In this regard, the mobile terminal may be capable of operating with one or more air interface standards, communication protocols, modulation types, access types, and/or the like. More particularly, the mobile terminal 110 may be capable of operating in accordance with various first generation (1G), second generation (2G), 2.5G, third-generation (3G) communication protocols, fourth-generation (4G) communication protocols, Internet Protocol Multimedia Subsystem (IMS) communication protocols (*e.g.,* session initiation protocol (SIP)), and/or the like. For example, the mobile terminal may be capable of operating in accordance with 2G wireless communication protocols IS-136 (Time Division Multiple Access (TDMA)), Global System for Mobile communications (GSM), IS-95 (Code Division Multiple Access (CDMA)), and/or the like. Also, for example, the mobile terminal may be capable of operating in accordance with 2.5G wireless communication protocols General Packet Radio Service (GPRS), Enhanced Data GSM Environment (EDGE), and/or the like. Further, for example, the mobile terminal may be capable of operating in accordance with 3G wireless communication protocols such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The mobile terminal may be additionally capable of operating in accordance with 3.9G wireless communication protocols such as Long Term Evolution (LTE) or Evolved Universal Terrestrial Radio Access Network (E-UTRAN) and/or the like. Additionally, for example, the mobile terminal may be capable of operating in accordance with fourth-generation (4G) wireless communication protocols and/or the like as well as similar wireless communication protocols that may be developed in the future.

Some Narrow-band Advanced Mobile Phone System (NAMPS), as well as Total Access Communication System (TACS), mobile terminals may also benefit from embodiments of this invention, as should dual or higher mode phones (*e.g.,* digital/analog or TDMA/CDMA/analog phones). Additionally, the mobile terminal 110 may be capable of operating according to WiFi) or Worldwide Interoperability for Microwave Access (WiMAX) protocols.

It is understood that the processor 120 may comprise circuitry for implementing audio/video and logic functions of the mobile terminal 110. For example, the processor 120 may comprise a digital signal processor device, a microprocessor device, an analog-to-digital converter, a digital-to-analog converter, and/or the like. Control and signal processing functions of the mobile terminal 110 may be allocated between these devices according to their respective capabilities. Further, the processor may comprise functionality to operate one or more software packages, which may be stored in memory. For example, the processor 120 may be capable of operating a software package that provides connectivity, such as a view that functions as a web browser. The connectivity program may allow the mobile terminal 110 to transmit and receive web content, such as location-based content, according to a protocol, such as Wireless Application Protocol (WAP), hypertext transfer protocol (HTTP), and/or the like. The mobile terminal 110 may be capable of using a Transmission Control Protocol/Internet Protocol (TCP/IP) to transmit and receive web content across the internet or other networks.

The mobile terminal 110 may also comprise a user interface including, for example, an earphone or speaker 124, a ringer 122, a microphone 126, a display 128, a user input interface, and/or the like, which may be operationally coupled to the processor 120. In this regard, the processor 120 may comprise user interface circuitry configured to control at least some functions of one or more elements of the user interface, such as, for example, the speaker 124, the ringer 122, the microphone 126, the display 128, and/or the like. The processor 120 and/or user interface circuitry comprising the processor 120 may be configured to control one or more functions of one or more elements of the user interface through computer program instructions (*e.g.,* software and/or firmware) stored on a memory accessible to the processor 120 (*e.g.*, volatile memory 140, non-volatile memory 142, and/or the like). The mobile terminal 110 may comprise sensors, such as a GPS 136, which may determine location information for the user. Although not shown, the mobile terminal may comprise a battery for powering various circuits related to the mobile terminal, for example, a circuit to provide mechanical vibration as a detectable output. The user input interface may comprise devices allowing the mobile terminal to receive data, such as a keypad 130, a touch display (not shown), a joystick (not shown), and/or other input device. In embodiments including a keypad, the keypad may comprise numeric (0-9) and related keys (#, *), and/or other keys for operating the mobile terminal.

The mobile terminal 110 may comprise memory, such as a smart cart, subscriber identity module or subscriber identification module (SIM), a removable user identity module (R-UIM), and/or the like, which may store information elements related to a mobile subscriber. In addition to the SIM, the mobile terminal may comprise other removable and/or fixed memory. The mobile terminal 110 may include other non-transitory memory, such as volatile memory 140 and/or non-volatile memory 142. For example, volatile memory 140 may include Random Access Memory (RAM) including dynamic and/or static RAM, on-chip or off-chip cache memory, and/or the like. Non-volatile memory 142, which may be embedded and/or removable, may include, for example, read-only memory, flash memory, magnetic storage devices (*e.g.*, hard disks, floppy disk drives, magnetic tape, etc.), optical disc drives and/or media, non-volatile random access memory (NVRAM), and/or the like. Like volatile memory 140 non-volatile memory 142 may include a cache area for temporary storage of data. The memories may store one or more software programs, instructions, pieces of information, data, and/or the like which may be used by the mobile terminal for performing functions of the mobile terminal. For example, the memories may comprise an identifier, such as an international mobile equipment identification (IMEI) code, capable of uniquely identifying the mobile terminal 110.

Returning to Figure 3, in an example embodiment, an apparatus configured to embody the task based system 10 includes various means for performing the various functions herein described. These means may comprise one or more of a processor 42, memory 44, communication interface 48, task management system 14, and/or software packages 16. The means of the task based system 10 as described herein may be embodied as, for example, circuitry, hardware elements (*e.g.*, a suitably programmed processor, combinational logic circuit, and/or the like), a computer program product comprising computer-readable program instructions (*e.g.,* software or firmware) stored on a computer-readable medium (*e.g.* memory 44) that is executable by a suitably configured processing device (*e.g.*, the processor 42), or some combination thereof.

Note that one or more general purpose or special purpose computing systems/devices may be used to implement the task based system 10. In addition, the task based system 10 may comprise one or more distinct computing systems/devices and may span distributed locations. Furthermore, each block shown may represent one or more such blocks as appropriate to a specific embodiment or may be combined with other blocks. For example, in some embodiments the task based system 10 may contain a task management system 14 and a software package 16. In other example embodiments a task management system 14 and/or a software package 16 may be configured to operate on separate systems (e.g. a mobile terminal and a remote server, multiple remote servers and/or the like). In some example embodiments, the pre-computation module may be configured to perform the computational load and thus may be on a remote device. In an example, the task management system 14 may be configured to operate on a mobile terminal whereas the one or more software packages 16 may be remote. Also, the task based system 10 may be implemented in software, hardware, firmware, or in some combination to achieve the capabilities described herein.

In an example embodiment, components/modules of the task based system 10 are implemented using standard programming techniques. For example, the task based system 10 may be implemented as a "native" executable running on the processor 42, along with one or more static or dynamic libraries. In other embodiments, the task based system 10 may be implemented as instructions processed by a virtual machine that executes as another program or software package. In general, a range of programming languages known in the art may be employed for implementing such example embodiments, including representative implementations of various programming language paradigms, including but not limited to, object-oriented (*e.g.*, Java, C++, C#, Visual Basic.NET, Smalltalk, and the like), functional (*e.g.*, ML, Lisp, Scheme, and the like), procedural (*e.g.,* C, Pascal, Ada, Modula, and the like), scripting (*e.g.*, Perl, Ruby, Python, JavaScript, VBScript, and the like), and declarative (*e.g.,* SQL, Prolog, and the like).

The embodiments described above may also use either well-known or proprietary synchronous or asynchronous client-server computing techniques. Also, the various components may be implemented using more monolithic programming techniques, for example, as an executable running on a single processor computer system, or alternatively decomposed using a variety of structuring techniques known in the art, including but not limited to, multiprogramming, multithreading, client-server, or peer-to-peer, running on one or more computer systems each having one or more processors. Some embodiments may execute concurrently and asynchronously, and communicate using message passing techniques. Equivalent synchronous embodiments are also supported. Also, other functions could be implemented and/or performed by each component/module, and in different orders, and by different components/modules, yet still achieve the described functions.

In addition, programming interfaces to the data stored as part of the task based system 10 can be made available by standard mechanisms such as through C, C++, C#, and Java APIs; libraries for accessing files, databases, or other data repositories; through languages such as XML; or through Web servers, FTP servers, or other types of servers providing access to stored data.

Different configurations and locations of programs and data are contemplated for use with techniques described herein. A variety of distributed computing techniques are appropriate for implementing the components of the illustrated embodiments in a distributed manner including but not limited to TCP/IP sockets, RPC, RMI, HTTP, Web Services (XML-RPC, JAX-RPC, SOAP, and the like). Other variations are possible. Also, other functionality could be provided by each component/module, or existing functionality could be distributed amongst the components/modules in different ways, yet still achieve the functions described herein.

The processor 42 may, for example, be embodied as various means including one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an ASIC or FPGA, or some combination thereof. Accordingly, although illustrated in Figure 3 as a single processor, in some embodiments the processor 42 comprises a plurality of processors. The plurality of processors may be in operative communication with each other and may be collectively configured to perform one or more functionalities of the task based system 10 as described herein. The plurality of processors may be embodied on a single computing device or distributed across a plurality of computing devices collectively configured to function as the task based system 10. In embodiments wherein the task based system 10 is embodied as a mobile terminal 110, the processor 42 may be embodied as or comprise the processor 120. In an example embodiment, the processor 42 is configured to execute instructions stored in the memory 44 or otherwise accessible to the processor 42. These instructions, when executed by the processor 42, may cause the task based system 10 to perform one or more of the functionalities of the task based system 10 as described herein. As such, whether configured by hardware or software methods, or by a combination thereof, the processor 42 may comprise an entity capable of performing operations according to embodiments of the present invention while configured accordingly. Thus, for example, when the processor 42 is embodied as an ASIC, FPGA or the like, the processor 42 may comprise specifically configured hardware for conducting one or more operations described herein. Alternatively, as another example, when the processor 42 is embodied as an executor of instructions, such as may be stored in the memory 44, the instructions may specifically configure the processor 42 to perform one or more algorithms and operations described herein.

The memory 44 may comprise, for example, transitory and/or non-transitory memory, such as volatile memory, non-volatile memory, or some combination thereof. Although illustrated in Figure 3 as a single memory, the memory 44 may comprise a plurality of memories. The plurality of memories may be embodied on a single computing device or may be distributed across a plurality of computing devices collectively configured to function as the task based system 10. In various example embodiments, the memory 44 may comprise, for example, a hard disk, random access memory, cache memory, flash memory, a compact disc read only memory (CD-ROM), digital versatile disc read only memory (DVD-ROM), an optical disc, circuitry configured to store information, or some combination thereof. In embodiments wherein the task based system 10 is embodied as a mobile terminal 110, the memory 44 may comprise the volatile memory 140 and/or the non-volatile memory 142. The memory 44 may be configured to store information, data, applications, instructions, or the like for enabling the task based system 10 to carry out various functions in accordance with various example embodiments.

The communication interface 48 may be embodied as any device or means embodied in circuitry, hardware, a computer program product comprising computer readable program instructions stored on a computer readable medium (*e.g.,* the memory 44) and executed by a processing device (*e.g.*, the processor 42), or a combination thereof that is configured to receive and/or transmit data to/from another computing device. For example, the communication interface 48 may be configured to receive application data over a network. The task based system 10 may interact via the network 50 via a communication interface 48 with one or more remote servers 52 and/or with remote software packages 54. The network 50 may be any combination of media (*e.g.,* twisted pair, coaxial, fiber optic, radio frequency), hardware (*e.g.*, routers, switches, repeaters, transceivers), and protocols (*e.g.,* TCP/IP, UDP, Ethernet, Wi-Fi, WiMAX) that facilitate communication between remotely situated humans and/or devices. In this regard, the communications interface 28 may be capable of operating with one or more air interface standards, communication protocols, modulation types, access types, and/or the like.

The user interface 12 may be in communication with the processor 42 to receive an indication of a user input at the user interface and/or to provide an audible, visual, mechanical or other output to the user. As such, the user interface may include, for example, a keyboard, a mouse, a trackball, a display, a touch screen, a microphone, a speaker, and/or other input/output mechanisms.

While the task based system 10 may be employed, for example, by a mobile terminal and/or a stand-alone system (e.g. remote server), it should be noted that the components, devices or elements described below may not be mandatory and thus some may be omitted in certain embodiments. Additionally, some embodiments may include further or different components, devices or elements beyond those shown and described herein.

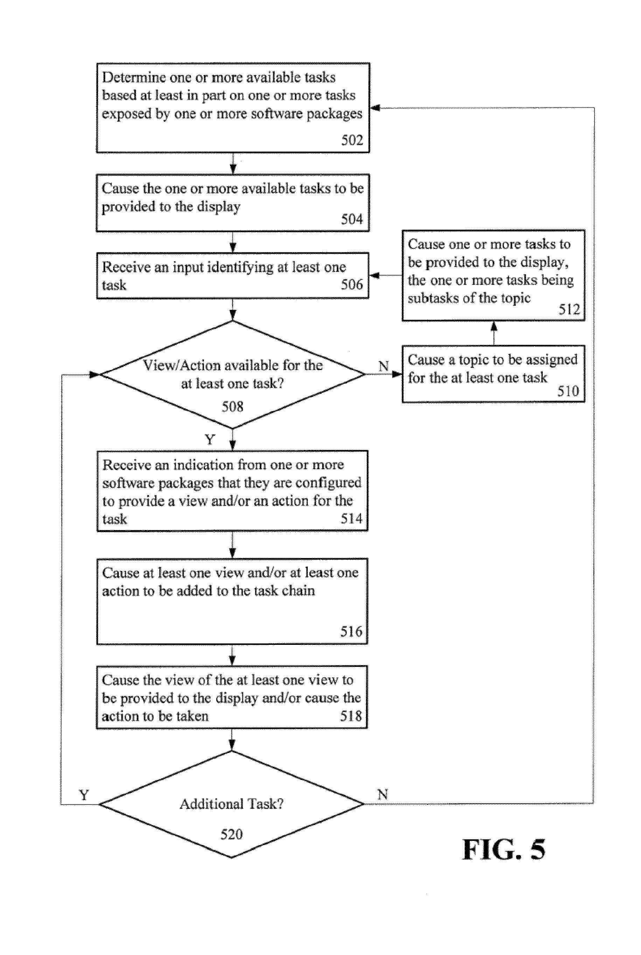

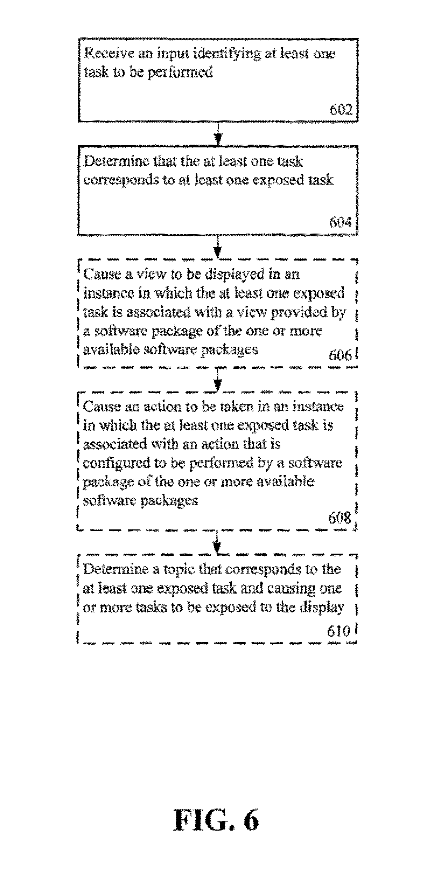

Figures 5 and 6 illustrate example flowcharts of the operations performed by an apparatus, such as task based system of Figure 3 and/or the mobile terminal 110, in accordance with one embodiment of the present invention. It will be understood that each block of the flowcharts, and combinations of blocks in the flowcharts, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory 44, volatile memory 140 and/or non-volatile memory 142 of an apparatus employing an embodiment of the present invention and executed by a processor 42 or processor 120 in the apparatus. As will be appreciated, any such computer program instructions may be loaded onto a computer or other programmable apparatus (*e.g.,* hardware) to produce a machine, such that the resulting computer or other programmable apparatus provides for implementation of the functions specified in the flowcharts' block(s). These computer program instructions may also be stored in a non-transitory computer-readable storage memory that may direct a computer or other programmable apparatus to function in a particular manner, such that the instructions stored in the computer-readable storage memory produce an article of manufacture, the execution of which implements the function specified in the flowcharts' block(s). The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowcharts' block(s). As such, the operations of Figures 5 and 6, when executed, convert a computer or processing circuitry into a particular machine configured to perform an example embodiment of the present invention. Accordingly, the operations of Figures 5 and 6 define an algorithm for configuring a computer or processor, to perform an example embodiment. In some cases, a general purpose computer may be provided with an instance of the processor which performs the algorithm of Figures 5 and 6 to transform the general purpose computer into a particular machine configured to perform an example embodiment.

Accordingly, blocks of the flowchart support combinations of means for performing the specified functions and combinations of operations for performing the specified functions. It will also be understood that one or more blocks of the flowcharts', and combinations of blocks in the flowchart, can be implemented by special purpose hardware-based computer systems which perform the specified functions, or combinations of special purpose hardware and computer instructions.

In some embodiments, certain ones of the operations herein may be modified or further amplified as described below. Moreover, in some embodiments additional optional operations may also be included (some examples of which are shown in dashed lines in Figure 6). It should be appreciated that each of the modifications, optional additions or amplifications below may be included with the operations above either alone or in combination with any others among the features described herein.

Figure 5 illustrates a flowchart according to an example method in a task based operating system according to an example embodiment of the invention. As shown in operation 502, an apparatus embodied, for example, by a task based system 10 and/or a mobile terminal 110, may include means, such as the processor 42, the task management system 14 the task provider 32, or the like, for determining one or more available tasks based at least in part on one or more tasks exposed by one or more software packages.

As shown in operation 504, the apparatus embodied, for example, by a task based system 10 and/or a mobile terminal 110, may include means, such as the processor 42, the task management system 14, the user interface 12, the task repository 26, or the like, for causing the one or more available tasks to be provided to the display. In some example embodiments, the one or more available tasks provided to the display may chosen based on at least one of popularity of a task of the one or more available tasks, historical task data or other contextual information.

As shown in operation 506, the apparatus embodied, for example, by a task based system 10 and/or a mobile terminal 110, may include means, such as the processor 42, the task management system 14 the user interface 12, or the like, for receiving an input identifying at least one task. In some example embodiments, the input received may include at least one of a selection from the graphical user interface, a voice input or a detected condition of a sensor. Alternatively or additionally the identification of a task may be accomplished automatically by a sensor, an event or otherwise based on current operating conditions.

As shown in decision operation 508, the apparatus embodied, for example, by a task based system 10 and/or a mobile terminal 110, may include means, such as the processor 42, the task management system 14 the task provider 32, or the like, for determining whether at least one of a view or an action is available for the at least one task. In an instance in which a view or action is not available for the at least one task, then, as shown in operation 510, the apparatus embodied, for example, by a task based system 10 and/or a mobile terminal 110, may include means, such as the processor 42, the task management system 14 the task provider 32, or the like, for causing a topic to be assigned for the at least one task. As shown in operation 512, the apparatus embodied, for example, by a task based system 10 and/or a mobile terminal 110, may include means, such as the processor 42, the task management system 14 the task provider 32, the task/topic controller 34 or the like, for causing one or more tasks to be provided to the display, the one or more tasks being subtasks of the topic. As such, the method may then return to operation 506.

In an instance in which a view or action is available for the at least one task, then, as shown in operation 514, the apparatus embodied, for example, by a task based system 10 and/or a mobile terminal 110, may include means, such as the processor 42, the task management system 14 the task provider 32, the task launcher 24 or the like, for receiving an indication from one or more software packages that they are configured to provide a view and/or an action for the task.

As shown in operation 516, the apparatus embodied, for example, by a task based system 10 and/or a mobile terminal 110, may include means, such as the processor 42, the task management system 14 the task provider 32, the task chain manager 22, or the like, for causing at least one view and/or at least one action to be added to the task chain. In some example embodiments, additional views may be added to the task chain, such that a user is able to scroll between or otherwise transition between the available views. As shown in operation 518, the apparatus embodied, for example, by a task based system 10 and/or a mobile terminal 110, may include means, such as the processor 42, the task management system 14 the task provider 32, the view controller 36, the action controller 38 or the like, for causing the view of the at least one view to be provided to the display and/or cause the action to be taken.

As shown in decision operation 520, the apparatus embodied, for example, by a task based system 10 and/or a mobile terminal 110, may include means, such as the processor 42, the task management system 14 the task provider 32, or the like, for determining whether an additional task has been received, such as via a current view, during a current action or otherwise input via the user interface 12. In an instance in which another task has not been determined, the method may restart at operation 502. Otherwise, the method returns to decision operation 508.

Figure 6 illustrates a flowchart according to an example method in a task based operating system according to an example embodiment of the invention. As shown in operation 602, the apparatus embodied, for example, by a task based system 10 and/or a mobile terminal 110, may include means, such as the processor 42, the user interface 12, the task management system 14 the task provider 32, or the like, for receiving an input identifying at least one task to be performed. As shown in operation 604, the apparatus embodied, for example, by a task based system 10 and/or a mobile terminal 110, may include means, such as the processor 42, the task management system 14 the task provider 32, or the like, for determining that the at least one task corresponds to at least one exposed task, the at least one exposed task is generated based on one or more tasks exposed by one or more available software packages.

As shown in operation 606, the apparatus embodied, for example, by a task based system 10 and/or a mobile terminal 110, may include means, such as the processor 42, the task management system 14 the task provider 32, or the like, for causing a view to be displayed in an instance in which the at least one exposed task is associated with a view provided by a software package of the one or more available software packages. In some example embodiments, the view is a graphical interface generated by the software package and is configured to perform the exposed task.

As shown in operation 608, the apparatus embodied, for example, by a task based system 10 and/or a mobile terminal 110, may include means, such as the processor 42, the task management system 14 the task provider 32, or the like, for causing an action to be taken in an instance in which the at least one exposed task is associated with an action that is configured to be performed by a software package of the one or more available software package. In some example embodiments, a view may be caused to be displayed in conjunction with the action to be taken, wherein the view is a graphical interface provided by the software package configured to perform the action.

As shown in operation 610, the apparatus embodied, for example, by a task based system 10 and/or a mobile terminal 110, may include means, such as the processor 42, the task management system 14 the task provider 32, or the like, for determining a topic that corresponds to the at least one exposed task. In some example embodiments, the topic may be caused to be provided to the one or more available software packages. Further and in some example embodiments, the one or more tasks may be caused to be expose to the user interface, such that the one or more tasks are received from the one or more available software packages in response to the topic and are subtasks of the topic.

Advantageously, the apparatus, method and computer program product as described herein enables a task based operating system. The task based operating system of the example embodiments defines entry points into one or more software packages that are configured to perform the desired task. Even if the task is to be performed across multiple software packages, the user witnesses a seamless transition between views generated by the multiple software packages while completing the task.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A method comprising:
receiving an input identifying at least one task to be performed;
determining that the at least one task corresponds to at least one exposed task, the at least one exposed task is generated based on one or more tasks exposed by one or more available software packages; and
causing a view to be displayed in an instance in which the at least one exposed task is associated with a view provided by a software package of the one or more available software packages, wherein the view is a graphical user interface generated by the software package and is configured to perform the at least one exposed task.

2. A method according to Claim 1, further comprising:
receiving, from one or more software packages, an indication that at least one of the one or more software packages is configured to provide at least one view for the at least one exposed task;
causing the at least one view to be added to a task chain.

3. A method according to Claim 2, further comprising:
causing another view to be added to the task chain; and
causing, via the graphical user interface, the at least one view or the another view in the task chain to be displayed, wherein the graphical user interface is configured to enable a user to select between the at least one view and the another view to be displayed.

4. A method according to Claim 1, further comprising:
receiving an indication of a task to be performed, the indication originating from an interaction with the view and providing context information from the view that is associated with the task to be performed.

5. A method according to Claim 1, further comprising:
determining one or more available tasks, the one or more available tasks based at least in part on one or more tasks exposed by one or more software packages; and
causing the one or more available tasks to be displayed.

6. A method according to Claim 5, wherein the one or more available tasks to be displayed are chosen based on at least one of popularity of a task of the one or more available tasks or context information.

7. A method according to Claim 1, further comprising:
causing an action to be taken in an instance in which the at least one exposed task is associated with an action that is configured to be performed by a software package of the one or more available software packages; and
causing a view to be displayed in conjunction with the action to be taken, wherein the view is a graphical interface provided by the software package configured to perform the action.

8. A method according to Claim 1, further comprising:
determining a topic that corresponds to the at least one exposed task;
causing the topic to be provided to the one or more available software packages; and
causing one or more tasks to be displayed, wherein the one or more tasks are received from the one or more available software packages in response to the topic and are subtasks of the topic.

9. A method according to Claim 1, wherein the input comprises at least one of a selection from the graphical user interface, a voice input or a detected condition of a sensor.

10. An apparatus comprising:
at least one processor; and
at least one memory including computer program code, the at least one memory and the computer program code configured to, with the at least one processor, cause the apparatus to at least:
receive an input identifying at least one task to be performed;
determine that the at least one task corresponds to at least one exposed task, the at least one exposed task is generated based on one or more tasks exposed by one or more available software packages; and
cause a view to be displayed in an instance in which the at least one exposed task is associated with a view provided by a software package of the one or more available software packages, wherein the view is a graphical user interface generated by the software package and is configured to perform the at least one exposed task.

11. An apparatus according to Claim 10, wherein the at least one memory including the computer program code is further configured to, with the at least one processor, cause the apparatus to:
receive, from one or more software packages, an indication that at least one of the one or more software packages is configured to provide at least one view for the at least one exposed task;
cause the at least one view to be added to a task chain.

12. An apparatus according to Claim 11, wherein the at least one memory including the computer program code is further configured to, with the at least one processor, cause the apparatus to:
cause another view to be added to the task chain; and
cause, via the graphical user interface, the at least one view or the another view in the task chain to be displayed, wherein the graphical user interface is configured to enable a user to select between the at least one view and the another view to be displayed.

13. An apparatus according to Claim 10, wherein the at least one memory including the computer program code is further configured to, with the at least one processor, cause the apparatus to:
receive an indication of a task to be performed, the indication originating from an interaction with the view and providing context information from the view that is associated with the task to be performed.

14. An apparatus according to Claim 10, wherein the at least one memory including the computer program code is further configured to, with the at least one processor, cause the apparatus to:
determine one or more available tasks, the one or more available tasks based at least in part on one or more tasks exposed by one or more software packages; and
cause the one or more available tasks to be displayed.

15. An apparatus according to Claim 14, wherein the one or more available tasks to be displayed are chosen based on at least one of popularity of a task of the one or more available tasks or context information.

16. An apparatus according to Claim 10, wherein the at least one memory including the computer program code is further configured to, with the at least one processor, cause the apparatus to:
cause an action to be taken in an instance in which the at least one exposed task is associated with an action that is configured to be performed by a software package of the one or more available software packages; and
cause a view to be displayed in conjunction with the action to be taken, wherein the view is a graphical interface provided by the software package configured to perform the action.

17. An apparatus according to Claim 10, wherein the at least one memory including the computer program code is further configured to, with the at least one processor, cause the apparatus to:
determine a topic that corresponds to the at least one exposed task;
cause the topic to be provided to the one or more available software packages; and
cause one or more tasks to be displayed, wherein the one or more tasks are received from the one or more available software packages in response to the topic and are subtasks of the topic.

18. An apparatus according to Claim 10, wherein the input comprises at least one of a selection from the graphical user interface, a voice input or a detected condition of a sensor.

19. A computer program product comprising:
at least one computer readable non-transitory memory medium having program code stored thereon, the program code which when executed by an apparatus cause the apparatus at least to:
receive an input identifying at least one task to be performed;
determine that the at least one task corresponds to at least one exposed task, the at least one exposed task is generated based on one or more tasks exposed by one or more available software packages; and
cause a view to be displayed in an instance in which the at least one exposed task is associated with a view provided by a software package of the one or more available software packages, wherein the view is a graphical user interface generated by the software package and is configured to perform the at least one exposed task.

20. A computer program product comprising according to Claim 19, further comprising program code instructions configured to:
receive, from one or more software packages, an indication that at least one of the one or more software packages is configured to provide at least one view for the at least one exposed task;
cause the at least one view to be added to a task chain.
